## Europäisches Patentamt

## European Patent Office

## Office européen des brevets

(11) Publication number: **0 221 126**
**B1**

(12)
# EUROPEAN PATENT SPECIFICATION

(45) Date of publication of the patent specification:
**06.09.89**

(51) Int. Cl.⁴: **B 60 K 25/06**

(21) Application number: **86902868.8**

(22) Date of filing: **06.05.86**

(86) International application number:
**PCT/GB 86/00238**

(87) International publication number:
**WO 86/06690 (20.11.86 Gazette 86/25)**

(54) **POWER TAKE-OFF APPARATUS.**

(30) Priority: **03.05.85 GB 8511274**

(43) Date of publication of application:
**13.05.87 Bulletin 87/20**

(45) Publication of the grant of the patent:
**06.09.89 Bulletin 89/36**

(84) Designated Contracting States:
**AT BE CH DE FR GB IT LI LU NL SE**

(56) References cited:
**EP-A- 0 081 024**
**US-A- 2 195 909**
**US-A- 2 619 208**
**US-A- 2 960 880**
**US-A- 3 982 443**
**US-B-40 593 8**

(73) Proprietor: **HARPWELD LIMITED trading as MARTIN-HARPER (ENGINEERING) LIMITED, 19 Commercial Road, Guildford, Surrey (GB)**

(72) Inventor: **WINTON, William, Robert, Woodlands, Woodham Lane Woking Surrey (GB)**
Inventor: **CHAPLIN, Brian, Edgar, 24 Foxburrow Avenue, Guildford Surrey (GB)**

(74) Representative: **Allen, William Guy Fairfax et al, J.A. KEMP & CO. 14 South Square Gray's Inn, London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a power take off apparatus for use in vehicles, which term includes land vehicles, watercraft and aircraft or with the output shaft of any prime mover. It has particular utility in vehicles.

Power take off apparatus in general is known. They are sold for fitting to heavy vehicles such as trucks or fire engines. Known apparatus of this kind is bulky and unsuitable for fitting to light lorries, cars and utility vehicles such as vans or «Land Rovers» (Land Rover is a Registered Trade Mark).

EP-A-0 081 024 discloses a power take off apparatus including a casing having first and second spaced end walls, these end walls having axially aligned openings therein. Mounted in the openings in the first and second end walls are first and second bearings of the roller or ball bearing type.

A first bevel gear is provided with an axial sleeve which is mounted in the first bearings and an output shaft is provided with an inwardly projecting sleeve mounted in the second bearings. A drive shaft passes through the first bevel gear and is rotatably mounted therein in axially spaced bearings formed within the interior ball of the first bevel gear and is also mounted in a set of bearings in the sleeve passing through the second end wall.

A tooth drive dog is splined to the drive shaft and has teeth engageable with teeth on the first bevel gear or teeth on the sleeve associated with the output shaft.

A second bevel gear meshes with the first bevel gear and is mounted on an axis perpendicular to the axis of the drive shaft in separate bearings. Movement of the drive dog enables either the output shaft to be connected to the input shaft or the first bevel gear, and hence the second bevel gear and its auxiliary output shaft, to be connected to the input drive shaft. This construction is very cumbersome and is not readily capable of discharging heavy loads.

US-A-2 195 909 discloses a further form of power take off assembly which is generally similar in concept to EP-A-0 081 024 but is even more complex in its design. It also discloses the possibility of having a detent mechanism associated with a manually operable control arrangement for moving the drive dog between the positions in which it engages the gears.

US-A-2 619 208 shows a still further form of power take off assembly, whilst involves the use of two bevel gears which give a laterally extending power take off. This construction is even more complex and will take up a large amount of room when associated with a vehicle.

It is now proposed, according to the present invention, to provide a power take-off apparatus comprising a casing, first axially spaced outer bearings mounted within said casing adjacent one axial end thereof, a first generally cylindrical sleeve rotatably mounted in said first outer bearings, said first sleeve being open at its inner and outer end extending through one said axial end of the casing, second axially spaced outer bearings mounted within said casing adjacent the other axial end thereof, a second generally cylindrical sleeve rotatably mounted in said second outer bearings said second sleeve being open at its inner end and having its outer end extending through said other axial end of the casing, said first and second sleeves being coaxial with one another and axially spaced from one another, first and second axially spaced inner bearings being coaxially mounted within said first and second sleeves respectively at locations within said casing a single drive shaft extending through said first end and through said first and second inner bearings, so has to be mounted for rotation in said first and second axially spaced inner bearings, an externally splined central portion of said drive shaft, a cooperatingly internally splined drive dog axially movable on said central portion between first and second positions, cooperating external teeth on said drive dog and internal teeth formed adjacent the inner ends of said first and second sleeves and means to move said drive dog between said first position in which its external teeth engage the internal teeth of the first sleeve drivingly, means for mounting an auxiliary power output device directly on the portion of the first sleeve extending through said one axial end of the casing and means for mounting a main power output device directly on the portion of the second sleeve extending through said other axial end of the casing, whereby the first sleeve can provide an auxiliary drive output via the means mounted directly thereon and a second position in which the drive dog teeth engage the teeth of the second sleeve drivingly, whereby the second sleeve can a main drive output via the means mounted directly thereon.

Preferably the power input means is arranged to couple directly to the drive shaft of a motor, engine or gearbox.

The selector means may be directly manually operated, e.g. by means of a selector lever, or may be operated e.g. electrically, for example by means of a solenoid, hydraulically or pneumatically.

It is an important part of the present invention that the auxiliary rotary power output be axially aligned with the rotary power input since considerable advantages of compactness and weight saving can thus be achieved.

It is to be understood that any suitable apparatus may be driven from the auxiliary power output means such as alternator or generator, an air compressor or a hydraulic pump or motor.

An embodiment of a power take off apparatus according to the present invention will now be described by way of example only, by reference to the accompanying drawings in which:

Fig. 1 is a cross-sectional plan of a power take off apparatus according to the present invention;

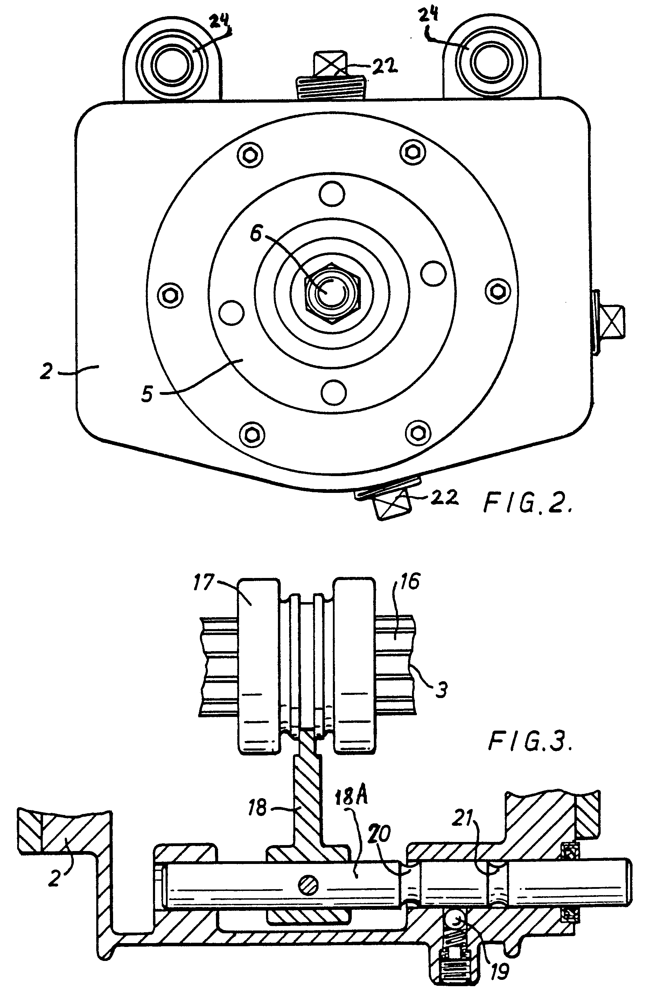

Fig. 2 is an end elevation of the apparatus of Fig. 1; and

Fig. 3 is a detail cross-sectional side elevation showing a selector mechanism.

Referring to the drawings a power take off apparatus 1 comprises a casing 2. A shaft 3 is arranged for rotation in the casing and at one end 4 extends out of the casing. Said one end 4 is splined and receives a connecting flange 5 secured thereto by means of nut 6. The connecting flange 5 is for connecting the through shaft 3 to e.g. the drive shaft of a gearbox or the propeller shaft of a vehicle (not shown).

Mounted for rotation in a bearing 7 within one end of the casing 2 is a first sleeve 8, concentrically arranged with respect to shaft 3 and provided with roller bearings 9 to support shaft 3 in rotation. Sleeve 8 extends out of the casing 2 and is provided with a threadedly recessed attachment flange 10 whereby a pulley or other power output device (not shown) may be secured thereto. Internal teeth are provided at the right end of first sleeve 8.

At the other end of the casing 2 there is provided a bearing 11 supporting in rotation a second sleeve 12, concentrically arranged with respect to shaft 3 and provided with roller bearings 13 to support shaft 3 in rotation. Second sleeve 12 extends through the said other end of the casing 2 and a flange plate 14 is secured thereto. Flange plate 14 is provided with attachment means in the form of threaded recesses 15 whereby second sleeve 12 may be connected to the transmission line (e.g. the continuation of a propeller shaft) of a vehicle (not shown). Internal teeth are provided at the left of second sleeve 12.

Longitudinally extending splines 16 are provided upon a central portion of shaft 3 and slidably carry a splined drive dog 17 thereupon. The dog 17 is arranged to slide between a first position in which teeth thereon mesh with the internal teeth on the second sleeve 12 to a second position in which teeth thereon mesh with the internal teeth on the first sleeve 8. A selector fork 18 engages dog 17 for this purpose and is secured to a selector spindle 18 capable of axial sliding movement between positions limited by spring loaded ball 19 and detent grooves 20, 21.

The casing 2 is adapted to be oil filled via filler/breather cap 22 and suitable oil seals 23 are provided throughout to prevent oil leakage. Mounting points 24 are provided upon casing 2 for securing it in position in a vehicle or the like.

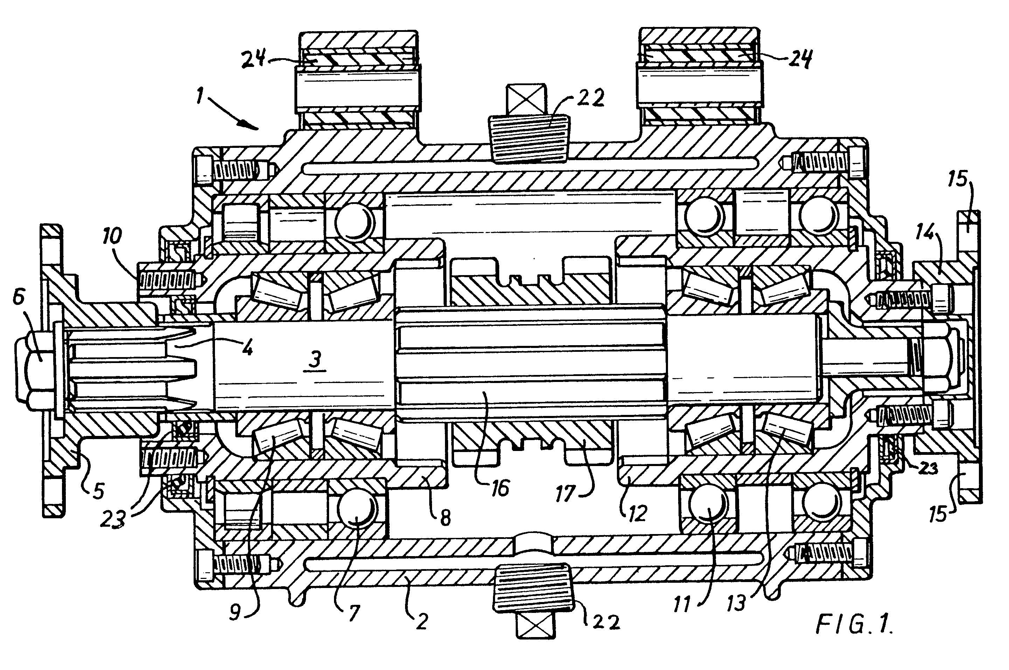

In use the apparatus 1 is connected e.g. in a propeller shaft of a vehicle (not shown). With the dog 17 in its rightmost position in Fig. 1 it interconnects shaft 3, with second sleeve 12 and transmits drive via flange plate 14 to the continuation of the propeller shaft of the vehicle. In the leftmost position drive to the second sleeve 12 is removed and instead transmitted via first sleeve 8 and flange 10 to a power output device such as a pulley (not shown).

Although in the embodiment shown no abaxial power output is provided, it is envisaged that first sleeve 8 could be provided with an external circumferential gear ring e.g. in region 25 thereof to drive a further output shaft via a gear drive train or other suitable means.

It is to be understood that although the invention has been described with reference to a unit adapted to be incorporated in a pre-existing transmission line the invention is equally applicable to gear boxes themselves. In other words the present invention embraces a primary gearbox for a vehicle which gearbox includes apparatus as defined.

## Claims

1. A power take-off apparatus comprising a casing (2), first axially spaced outer bearings (7) mounted within said casing (2) adjacent one axial end thereof, a first generally cylindrical sleeve (8) rotatably mounted in said first outer bearings, said first sleeve (8) being open at its inner and outer ends, the outer end extending through one said axial end of the casing (2), second axially spaced outer bearings (11) mounted within said casing (2) adjacent the other axial end thereof, a second generally cylindrical sleeve (12) rotatably mounted in said second outer bearings (11), said second sleeve (12) being open at its inner end and having its outer end extending through said other axial end of the casing (2), said first and second sleeves (8, 12) being coaxial with one another and axially spaced from one another, first second axially spaced inner bearings (9, 13) being coaxially mounted within said first and second sleeves (8, 12), respectively at locations within said casing (2), a single drive shaft (3), extending through said first end and through said first and second inner bearings, so as to be mounted for rotation in said first and second axially spaced inner bearings, an externally splined central portion (16) of said drive shaft (3), a cooperatingly internally splined drive dog (17) axially movable on said central portion (16) between first and second positions, cooperating external teeth on said drive dog and internal teeth formed adjacent open inner ends of said first and second sleeves and means (18) to move said drive dog between said first position in which its external teeth engage the internal teeth of the first sleeve (8) drivingly, means (10) for mounting an auxiliary power output device directly on the portion of the first sleeve (8) extending through said one axial end of the casing and means (14, 15) for mounting a main power output device directly on the portion of the second sleeve (12) extending through said other axial end of the casing, whereby the first sleeve (8) can provide an auxiliary drive output via the means (10) mounted directly thereon and a second position in which the drive dog teeth (17) engage the teeth of the second sleeve (12) drivingly, whereby the second sleeve (12) can provide a main drive output via the means (14, 15) mounted directly thereon.

2. Apparatus according to claim 1, wherein said casing (2) includes a generally cylindrical tubular portion extending between said the axial ends thereof, and wherein said first and second outer bearings (7, 11) bear directly against the inner surface of said tubular portion.

3. Apparatus according to claim 1 or 2, wherein said first inner bearing (9) is disposed fully within the axial extent of said first axially spaced outer bearings (7), and wherein said second inner bearing (13), is disposed fully within the axial extent of said second axially spaced outer second bearings (11).

4. Apparatus according to claim 1 or 2, wherein said first and second inner bearings (9, 13) each comprise two axially spaced bearing parts and wherein the axial extent of said bearing parts of each said first and second inner bearings, (9, 13) is wholly within the axial extent of the first and second axially spaced outer bearings, respectively, (7, 11).

5. Apparatus according to any preceding claim, wherein said drive dog (17) is axially movable to a position between said first and second positions in which the teeth on said drive dog do not engage with the teeth of either of the first and second sleeves (8, 12).

6. Apparatus according to any preceding claim, wherein said means (18) to move said drive dog (17) comprise an axially slidable selector spindle (18A) having a selector fork (18) mounted thereon engageable with said axially movable dog (17), and axially spaced circumferential detent grooves (20, 21) on said spindle engageable by a spring-loaded ball (19) to define said first and second positions.

7. A vehicle which includes a power take-off apparatus claimed in any one of the preceding claims.


**Patentansprüche**

1. Kraftabtriebsvorrichtung mit
— einem Gehäuse (2),
— ersten, axial beabstandeten, äußeren Lagern (7), die in dem Gehäuse (2) an einem axialen Ende davon montiert sind,
— einer ersten, im wesentlichen zylindrischen Hülse (8),
- die drehbar in den ersten, äußeren Lagern eingesetzt ist,
- die an ihrem inneren und äußeren Ende offen ist und
- deren äußeres Ende sich durch das eine axiale Ende des Gehäuses (2) hindurcherstreckt,
— zweiten, axial beabstandeten, äußeren Lagern (11), die in dem Gehäuse (2) an dessem anderen axialen Ende montiert sind,
— einer zweiten, im wesentlichen zylindrischen Hülse (12),
- die drehbar in den zweiten, äußeren Lagern (11) eingesetzt ist,
- die an ihrem inneren Ende offen ist und
- deren äußeres Ende sich durch das andere axiale Ende des Gehäuses (2) hindurch erstreckt,
- wobei die ersten und zweiten Hülsen (8, 12) koaxial zueinander und axial beabstandet voneinander angeordnet sind,
— ersten und zweiten, axial beabstandeten, inneren Lagern (9, 13), die innerhalb der ersten und zweiten Hülsen (8, 12) bzw. an Stellen innerhalb des Gehäuses (2) koaxial zueinander montiert sind,
— einer Einzelantriebswelle (3), die sich durch das besagte erste Ende und durch die ersten und zweiten inneren Lager hindurch erstreckt, so daß sie in den ersten und zweiten, axial beabstandeten, inneren Lagern drehbar montiert ist,
— einem zentralen Abschnitt (16) der Antriebswelle (3), der auf seiner Außenseite mit Keilwellennuten versehen ist,
— einem damit zusammenwirkenden, auf seiner Innenseite mit Keilwellennuten versehenen Antriebsmitnehmer (17), der auf dem zentralen Abschnitt (16) zwischen einer ersten und zweiten Position axial bewegbar ist,
— zusammenwirkenden außenliegenden Zähnen am Antriebsmitnehmer und innenliegenden Zähnen, die im Bereich der offenen inneren Enden der ersten und zweiten Hülsen eingeformt sind und

— Mitteln (18), um den Antriebsmitnehmer zwischen der ersten und der zweiten Position zu bewegen, wobei
- in der ersten Position die außenliegenden Zähne des Antriebsmitnehmers in die innenliegenden Zähne der ersten Hülse (8) unter Kraftschluß eingreifen,
- Mittel (10) zur Befestigung einer Hilfskraft-Abtriebsvorrichtung direkt an dem Abschnitt der ersten Hülse (8) vorgesehen sind, der durch das eine axiale Ende des Gehäuses hindursteht,
- Mittel (14, 15) zur Befestigung einer Hauptkraft-Abtriebsvorrichtung direkt an dem Abschnitt der zweiten Hülse (12) vorgesehen sind, der durch das andere axiale Ende des Gehäuses hindursteht, wobei durch die erste Hülse (8) eine Hilfsantrieb-Leistungsabgabe über die direkt daran befestigten Mittel (10) geschaffen ist und
- in der zweiten Position die Zähne des Antriebsmitnehmers (17) in die Zähne der zweiten Hülse (12) unter Kraftschluß eingreifen, wobei durch die zweite Hülse (12) eine Hauptantrieb-Leistungsabgabe über die direkt daran befestigten Mittel (14, 15) geschaffen ist.

2. Vorrichtung nach Anspruch 1, wobei das Gehäuse (2) einen im wesentlichen zylindrischen, rohrförmigen Abschnitt aufweist, der sich zwischen dessen axialen Enden erstreckt und in dem die ersten und zweiten äußeren Lager (7, 11) sich direkt an der Innenfläche des rohrförmigen Abschnittes abstützen.

3. Vorrichtung nach Anspruch 1 oder 2, wobei das erste innere Lager (9) vollständig innerhalb der axialen Ausdehnung der ersten, axial beabstandeten, äußeren Lager (7) angeordnet ist und wobei das zweite innere Lager (13) vollständig innerhalb der axialen Ausdehnung der zweiten, axial beabstandeten äußeren Lager (11) angeordnet ist.

4. Vorrichtung nach Anspruch 1 oder 2, wobei die ersten und zweiten inneren Lager (9, 13) jeweils zwei axial beabstandete Lagerteile enthalten und wobei die axiale Ausdehnung dieser Lagerteile von jedem der ersten und zweiten inneren Lager (9, 13) vollständig innerhalb der axialen Ausdehnungen der ersten bzw. zweiten axial beabstandeten, äußeren Lager (7, 11) liegt.

5. Vorrichtung nach einem der vorgenannten Ansprüche, wobei der Antriebsmitnehmer (17) axial in eine Position zwischen der besagten ersten und zweiten Position bewegbar ist, in der die Zähne am Antriebsmitnehmer weder mit den Zähnen an der ersten, noch denen an der zweiten Hülse (8, 12) in Eingriff stehen.

6. Vorrichtung nach einem der vorgenannten Ansprüche, wobei die Mittel (18) zur Bewegung des Antriebsmitnehmers (17) eine axial gleitbare Selektionsspindel (18A) umfassen, die
— eine daran befestigte, mit dem bewegbaren Mitnehmer (17) in Eingriff bringbare Selektionsgabel (18) und
— Axial beabstandete Umfangseinrückvertiefungen (21) aufweist, in die eine federbeaufschlagte Kugel (19) in Eingriff bringbar ist, um die besagte erste und zweite Position zu definieren.

7. Fahrzeug, das eine Kraftabtriebsvorrichtung enthält, wie sie in einem der vorgenannten Ansprüche beansprucht ist.

## Revendications

1. Appareil de prise de force comportant un carter (2), des premiers roulements extérieurs (7), axialement espacés, montés à l'intérieur dudit carter (2), près de sa première extrémité axiale, un premier manchon (8), de forme générale cylindrique, monté, avec liberté de rotation, dans lesdits premiers roulements extérieurs, ledit premier manchon (8) étant ouvert à son extrémité intérieure et à son extrémité extérieure, l'extrémité extérieure s'étendant à travers ladite première extrémité axiale du carter (2), comportant en outre des seconds roulements extérieurs (11), axialement espacés montés à l'intérieur dudit carter (2), près de son autre extrémité axiale, un second manchon (12), de forme générale cylindrique, monté, avec liberté de rotation, dans lesdits seconds roulements extérieurs (11), ledit second manchon (12) étant ouvert à son extrémité intérieure et ayant son extrémité extérieure sétendant à travers ladite autre extrémité axiale du carter (2), ledit premier et ledit second manchons (8, 12) étant coaxiaux l'un avec l'autre et axialement espacés l'un de l'autre, des premiers et seconds roulements intérieurs (9, 13), axialement espacés, étant montés coaxialement à l'intérieur dudit premier et dudit second manchons (8, 12), respectivement en des positions à l'intérieur dudit carter (2), un unique arbre d'entraînement (3) s'étendant à travers ladite première extrémité et à travers lesdits premiers et seconds roulements intérieurs, de façon à pouvoir tourillonner dans lesdits premiers et seconds roulements intérieurs axialement espacés, avec une portion centrale (16), cannelée extérieurement, dudit arbre d'entraînement (3), avec un crabot d'entraînement (17), cannelé intérieurement de façon collaborante et pouvant se déplacer axialement sur ladite portion centrale (16) entre une première et une seconde positions, avec, collaborantes, des dents extérieures sur ledit crabot d'entraînement et des dents intérieures formées près des extrémités intérieures ouvertes dudit premier et dudit second manchons et avec des moyens (18) pour déplacer ledit crabot d'entraînement entre ladite première position, dans laquelle ses dents extérieures engrènent avec les dents intérieures du premier manchon (8) pour entraînement, étant précisé que des moyens (10) sont prévus pour monter un dispositif auxiliaire de prise de force directement sur la portion du premier manchon (8) qui s'étend à travers ladite première extrémité axiale du carter et que des moyens (14, 15) sont prévus pour monter un dispositif principal de prise de force directement sur la portion du second manchon (12) qui s'étend à travers ladite autre extrémité axiale du carter, ce par quoi le premier manchon (8) peut fournir une prise de force auxiliaire par l'intermédiaire des moyens (10) qui y sont directement montés, et une seconde position dans laquelle les dents du crabot d'entraînement (17) engrènent avec les dents du second manchon (12), pour entraînement, ce par quoi le second manchon (12) peut donner une prise de force principale par l'intermédiaire des moyens (14, 15) qui y sont montés directement.

2. Appareil selon la revendication 1, dans lequel ledit carter (2) comporte une portion tubulaire, de forme générale cylindrique, s'étendant entre ses dites extrémités axiales, et dans lequel lesdits premiers et seconds roulements extérieurs (7, 11) portent directement contre la surface intérieure de ladite portion tubulaire.

3. Appareil selon la revendication 1 ou 2, dans lequel ledit premier roulement intérieur (9) est entièrement disposé à l'intérieur de l'extension axiale desdits premiers roulements extérieurs (7) axialement espacés, et dans lequel ledit second roulement intérieur (13) est disposé entièrement à l'intérieur de l'extension axiale desdits seconds roulements extérieurs (11) axialement espacés.

4. Appareil selon la revendication 1 ou 2, dans lequel ledit premier et ledit second roulements intérieurs (9, 13) sont chacun constitués de deux parties de roulement axialement espacées et dans lequel l'extension axiale desdites parties de roulement dudit premier et dudit second roulements intérieurs (9, 13) est entièrement située à l'intérieur de l'extension axiale desdits premiers et seconds roulements extérieurs, axialement espacés, respectivement (7, 11).

5. Appareil selon l'une quelconque des revendications précédentes, dans lequel ledit crabot d'entraînement (17) peut se déplacer axialement pour prendre entre ladite première et ladite seconde positions, une position dans laquelle les dents dudit crabot d'entraînement n'engrènent ni avec les dents du premier ni avec les dents du second manchon (8, 12).

6. Appareil selon l'une quelconque des revendications précédentes, dans lequel lesdits moyens (18) prévus pour déplacer ledit crabot d'entraînement (17) comprennent une broche sélectrice (18A), qui peut coulisser axialement et présente une fourchette sélectrice (18) montée sur elle et pouvant venir en prise avec ledit crabot (17) mobile axialement, ainsi que des gorges d'arrêt circonférentielles (20, 21), qui sont axialement espacées sur ladite broche et avec lesquelles peut venir en prise une bille (19) contrainte par un ressort pour définir ladite première et ladite seconde positions.

7. Véhicule comportant un appareil de prise de force revendiqué dans l'une des revendications précédentes.

FIG.1.

EP 0 221 126 B1

24

24

22

6

5

2

22   *FIG.2.*

17   16

3

18   18A

2   20   21

19   *FIG.3.*